Europäisches Patentamt

**European Patent Office**

**Office européen des brevets**

(11) Publication number: **0 232 725**
**A1**

## (12) EUROPEAN PATENT APPLICATION

(21) Application number: **87100318.2**

(22) Date of filing: **13.01.87**

(51) Int. Cl.⁴: **E 04 H 6/18,** B 65 G 1/10

(30) Priority: **13.01.86 US 818253**

(43) Date of publication of application: **19.08.87**
**Bulletin 87/34**

(84) Designated Contracting States: **DE FR GB IT**

(71) Applicant: **Sing, Peter, 168-10 84 th Avenue, Jamaica Hill, New York (US)**

(72) Inventor: **Sing, Peter, 168-10 84 th Avenue, Jamaica Hiii, New York (US)**

(74) Representative: **Baillie, Iain Cameron et al, c/o Ladas & Parry Isartorplatz 5, D-8000 München 2 (DE)**

(54) **Storage system.**

(57)    A storage system in one embodiment comprising an array of storage cells, each storage cell comprising a first carrier propulsion system and a second carrier propulsion system; the first carrier propulsion system for moving a cargo carrier in a first direction, operable when in contact with the cargo carrier, and actuated by a selectively actuated motive force; the second carrier propulsion system for moving a cargo carrier in a second direction, operable when in contact with the cargo carrier, and actuated by a selectively actuated motive; and means for selectively causing or preventing contact between a cargo carrier and the first carrier propulsion system or the second carrier propulsion system.

-1-

## STORAGE SYSTEM

This invention relates to a storage system, and more specifically, to a storage system usable for the compact storage and expeditious retrieval of cargo containers, automobiles and myriad other items.

As is well known, the cost of land in most metropolitan and industrial areas is relatively expensive. In connection with the storage of items, there has long been a need to maximize the utilization of space to minimize the amount of land, and thus the attendant cost, of storage.

The present invention, a storage system, in one embodiment comprises an array of storage cells, each storage cell containing a first carrier propulsion system and a second carrier propulsion system. The first carrier propulsion system, for moving a cargo carrier in a first direction, is operable when in contact with the cargo carrier, and is actuated by a selectively actuated motive force. The second carrier propulsion system, for moving a cargo carrier in a second direction, also is operable when in contact with the cargo carrier, and also is actuated by a

CASE: 818,253

selectively actuated motive force. Also provided are means for selectively causing or preventing contact between a cargo carrier and the first carrier propulsion system or the second carrier propulsion system.

This and other embodiments, and their advantages and uses, are described, or described in greater detail, below.

Figure 1 shows a floor plan of one level of a storage system that uses this invention.

Figure 2 shows a side view of a cargo carrier and a longitudinal carrier propulsion unit.

Figure 3 is a sectional view, taken along section line A-A' of Figure 2, showing one embodiment of a drive unit for the carrier propulsion units of this invention.

Figure 4 is an isometric drawing depicting the arrangement of the longitudinal carrier propulsion units and the transverse carrier propulsion units of a single storage cell.

Figures 5A and 5B respectively show bottom and side views of the rail arrangement for a particular cargo carrier. Figure 5C is a sectional view, taken along section line B-B' of Figure 5A, showing the arrangement of the wheel support bars used to aid support of an automobile.

Figure 6 is a side view of a two level elevator usable in connection with this invention.

Figure 7 is a perspective view of a multi-level, multi-elevator parking garage according to the invention.

Figure 8 shows a floor plan of one level of a multi-level, multi-elevator storage system according to the invention.

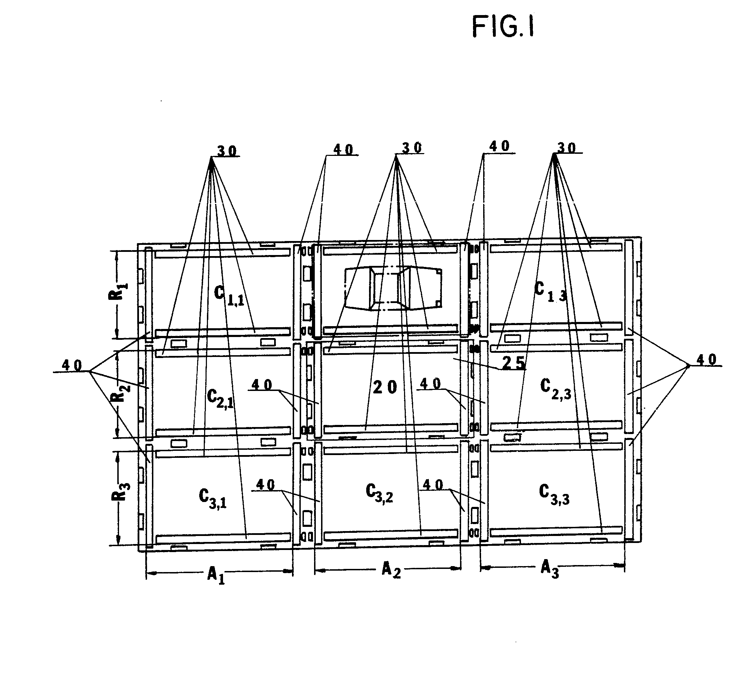

Figure 1 shows the floor plan of one level of a structure that utilizes this storage system. Generally, a storage facility using this storage system can have one or more levels, with cargo capable of being delivered to and retrieved from a particular level via an elevator or hoist system. The term "cargo" herein refers to any items for which storage is desired, such as automobiles, truck cargo containers, and the like.

The basic unit of storage in this invention is the storage cell, denominated by the letter C in Figure 1. The floor plan shown in Figure 1 comprises an array of storage cells. The array is made up of a number of rows and aisles of storage cells, with the rows extending in the longitudinal direction (the horizontal direction in Figure 1) and the aisles extending in the transverse direction (the vertical direction in Figure 1). The location of each row R is identified by a subscript; thus the first row is denominated in Figure 1 as row $R_1$, the second row as row $R_2$, and so on. Similarly, the location of each aisle A is identified by a subscript; thus the first aisle is denominated in Figure 1 as aisle $A_1$, the second aisle as aisle $A_2$, and so on.

-4-

A particular storage cell C in the array is identified by a two-number subscript, as follows: $C_{x,y}$. The first number in the subscript denotes the row in which the cell is located and the second number denotes the aisle in which the cell is located. Thus storage cell $C_{2,3}$ denotes the storage cell located in row $R_2$ and aisle $A_3$.

An elevator shaft 20 is shown at position 2,2 of Figure 1 for delivery to and retrieval from the level shown, where the floor plan shown is only one level of a multi-leveled structure. A vehicle 10 is shown stored in cell $C_{1,2}$.

Structurally, each storage cell C contains a first carrier propulsion system and a second carrier propulsion system. These two propulsion systems are means for moving cargo into and out of the storage cell in either of two directions, which in the embodiment shown in the Figures are the longitudinal direction and the transverse direction. Specifically, the first carrier propulsion system, the longitudinal carrier propulsion system, comprises two longitudinal carrier propulsion units 30. The second carrier propulsion system, the transverse carrier propulsion system, comprises two transverse carrier propulsion units 40.

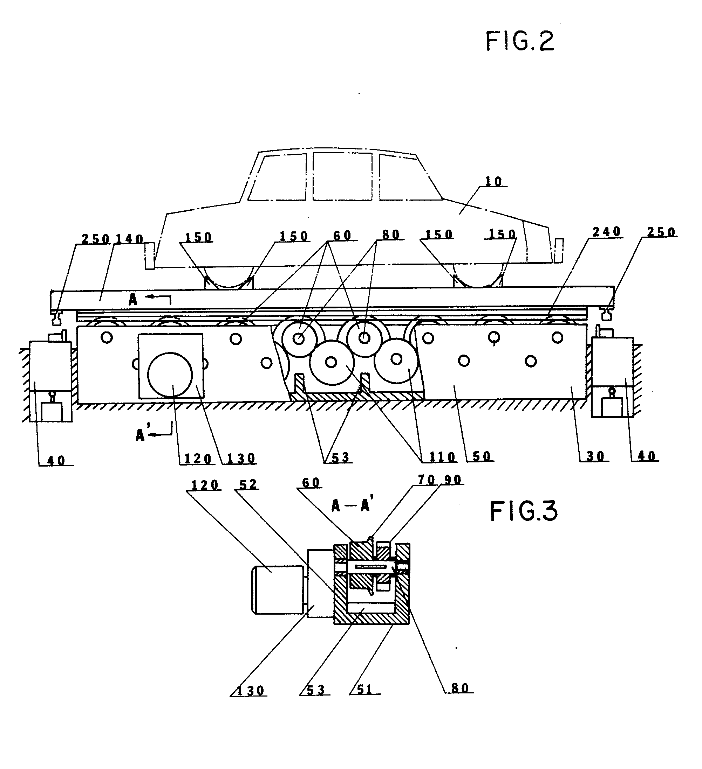

The structure of each longitudinal carrier propulsion unit 30 is identical to the structure of each transverse carrier propulsion unit 40. Thus, an exemplary carrier propulsion unit, a longitudinal carrier propulsion unit 30, is shown in Figure 2. Each carrier propulsion unit comprises a carrier propulsion frame 50, which is a U-shaped section formed of a web 51 joined to two flanges 52. A plurality of cargo carrier drive wheels 60 are mounted on carrier propulsion frame 50. Each drive wheel 60 is supported between the flanges 52 of carrier propulsion frame 50 on a shaft 80 so that a portion of each drive wheel 60 protrudes beyond the upper edges of the flanges 52. Bulkheads 53 span the space between the flanges 52 under each drive wheel 60 to reinforce frame 50.

As can be seen in Figures 2 and 3, each drive wheel 60 has a guide flange 70 on its inner edge. Also mounted on each shaft 80 is a pinion 90. The pinions of adjacent shafts 80 are commonly meshed to a drive transfer gear 110. At least one of the shafts 80 on carrier propulsion frame 50 is driven by a drive motor 120 through a gear box 130, as shown in Figure 3. Because each pair of adjacent drive wheels 60 is mechanically coupled together by a drive transfer gear 110, it can be seen that all drive wheels 60 are driven by drive motor 120. Drive motor 120 can take a wide variety of forms, and can, for example, be powered by hydraulics, pneumatics, compressed air, electricity, or petrochemical fuels, depending upon the local energy costs, the anticipated service environment, and other such factors.

Instead of using drive transfer gears 110, drive wheels 60 can also be linked to a drive motor 120 by means of any other well-known power transfer system, such as by way of a shaft drive or chain drive. The linkage can also be accomplished by fashioning an endless belt around drive wheels 60.

-6-

The item or items to be stored, as exemplified by automobile 10 in Figures 1 and 2, are moved to and from the intended storage cells on cargo carriers 140 (cargo carriers 140 are sometimes hereinafter referred to as "automobile carriers" when they are for supporting automobiles). Each cargo carrier 140 remains in the storage cell during the time the item or items are being stored in the storage cell.

Each cargo carrier 140 is a structure that can be adapted to carry specific types of items; thus, for example, cargo carrier 140 shown in Figure 2, an automobile carrier, is equipped with chocks 150 to securely position an automobile on carrier 140.

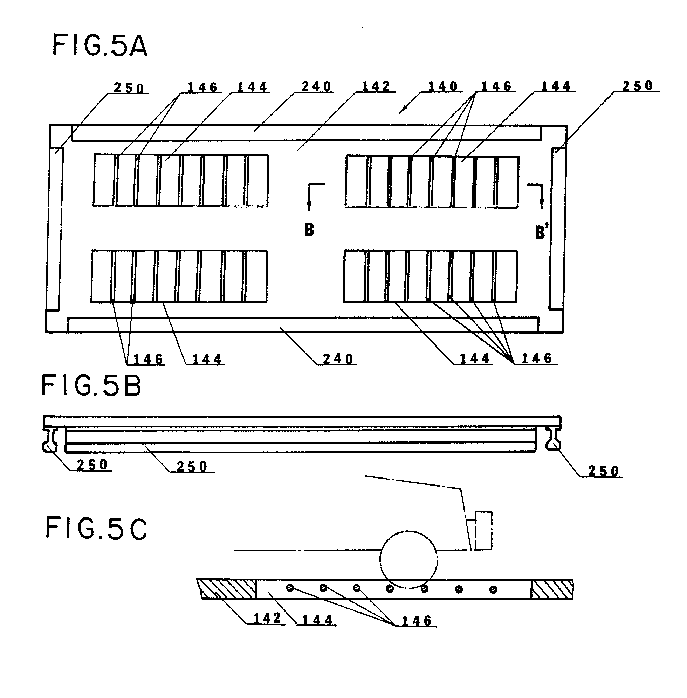

Another embodiment of cargo carrier 140, shown in Figures 5A-5C, depicts structural components that aid guiding the movement of cargo carrier 140. As presently relevant, there is shown a cargo carrier 140 comprising a carrier chassis 142. The underside of carrier chassis 142 is equipped with rails for guiding the movement of carrier 140 on cargo carrier drive wheels 60. The arrangement of these rails is shown in Figures 5A and 5B.

Figure 5A shows longitudinal carrier rails 240 and transverse carrier rails 250 affixed to the underside of carrier chassis 142. The gauge of longitudinal carrier rails 240 is such that cargo carrier 140 is securely supported on the cargo carrier drive wheels 60 of the longitudinal carrier propulsion units 30 of a storage cell, with the guide flanges 70 of the drive wheels 60 guiding the movement of longitudinal carrier rails 240. Likewise, the gauge of transverse carrier rails 250 is such that cargo carrier 140 is securely supported on the cargo carrier drive wheels 60 of the transverse carrier propulsion units 40 of a storage cell, with the guide flanges 70 of the cargo carrier drive wheels 60 guiding the movement of transverse carrier rails 250.

The cargo carrier 140 shown in Figures 5A-5C is an automobile carrier. In lieu of chocks 150 to securely position an automobile on carrier 140, carrier chassis 142 contains four apertures 144 arranged so that the wheels of an automobile, if positioned upon chassis 142, will repose over apertures 144. The wheels of the automobile can be supported over apertures 144 by making the length of each aperture less than the diameter of the tires of the automobile to be carried on carrier 140, or by spanning each aperture 144 with one or more wheel support bars 146. The distance between wheel support bars 146, and the distance between the forward or rearward edge of any aperture 144 and the support bar 146 immediately adjacent that edge, should be less than the diameter of the tires of the automobile to be carried on carrier 140.

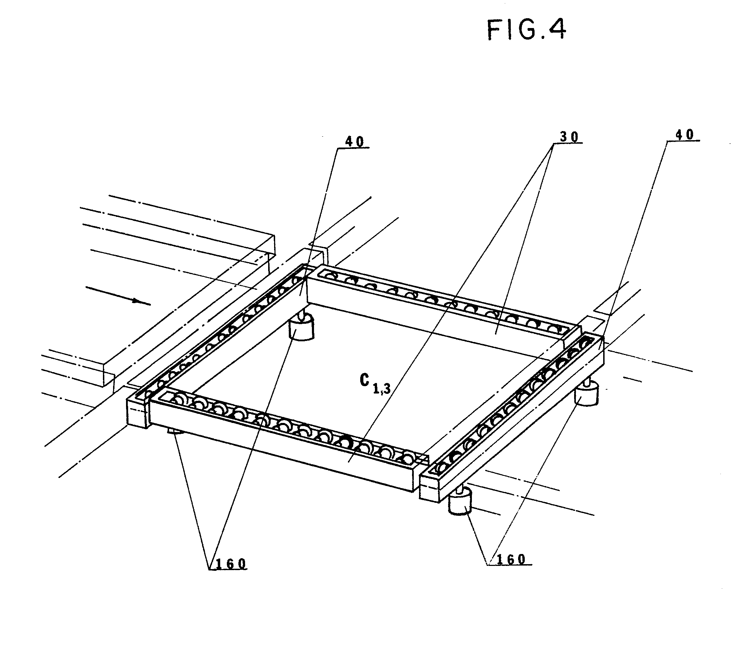

Figure 4 shows the arrangement of the carrier propulsion units 30 and 40 of cell $C_{1,3}$. Longitudinal carrier propulsion units 30 are of fixed elevation; in contrast, the elevation of transverse carrier propulsion units 40 can be changed by actuating jacks 160, a pair of which are attached to the web 51 of each carrier propulsion frame 50 of longitudinal carrier propulsion units 40. Jacks 160 can move each transverse carrier propulsion unit 40 from a first position, where the drive wheels 60 of carrier propulsion unit 40 are lower in elevation than the drive wheels 60 of the cell's longitudinal carrier propulsion units 30, to a second position, where the drive wheels 60 of propulsion units 40 are higher in elevation than the drive wheels 60 of the cell's longitudinal carrier propulsion units 30. Jacks 160 can be driven in any of a wide number of ways, such as by hydraulics, pneumatics, compressed air, or by a worm and screw arrangement powered by a hydraulic, pneumatic, compressed air, electric, steam or internal combustion motor or engine.

The elevation of the drive wheels 60 of transverse carrier propulsion units 40 relative to the elevation of the drive wheels 60 of longitudinal propulsion units 30 determines whether cargo carrier 140 will move in the longitudinal or transverse direction. Thus, for example, if it is desired to move a cargo carrier 140 from cell $C_{1,2}$ to cell $C_{1,3}$, the transverse carrier propulsion units 40 in both cells $C_{1,2}$ and cell $C_{1,3}$ are put in their lower, first position and the drive motors of the longitudinal carrier propulsion units 30 of cells $C_{1,2}$ and cell $C_{1,3}$ are engaged until cargo carrier 140 moves from cell $C_{1,2}$ to cell $C_{1,3}$. If it is next desired to move this same cargo carrier 140 from cell $C_{1,3}$ to cell $C_{2,3}$, the transverse carrier propulsion units 40 of those cells is raised via jacks 160 to their second, elevated position (and, in the case of cells $C_{1,3}$,

raising its transverse carrier propulsion units 40 also raises cargo carrier 140), and the drive motors 120 of transverse carrier propulsion units 40 of cells $C_{1,3}$ to cell $C_{2,3}$ are engaged until cargo carrier 140 moves from $C_{1,3}$ to cell $C_{2,3}$.

Jacks 160 can also be used on longitudinal carrier propulsion units 30 with transverse carrier propulsion units 40 being fixed in elevation. It is preferred that jacks 160 be used in conjunction with the shorter carrier propulsion units, which are the lighter ones and thus easier to elevate.

As an alternative to providing jacks 160 under the longitudinal or transverse carrier propulsion units of each cell, the longitudinal or transverse carrier rails of cargo carrier 140 can be equipped with a jacking mechanism or mechanisms. For example, jacking mechanisms can be provided between transverse carrier rails 250 and cargo carrier 140 to extend transverse carrier rails 250 from a first position, where transverse carrier rails 250 protrude from the bottom of cargo carrier 140 a distance less than that of longitudinal carrier rails 240, to a second position, where transverse carrier rails 250 protrude from the bottom of cargo carrier 140 a distance greater than that of longitudinal carrier rails 240. Then when it is desired to move cargo carrier 140 in the longitudinal direction, the jacking mechanisms retract transverse carrier rails 250 to their first position; correspondingly, when it is desired to move cargo carrier 140 in the transverse direction, the jacking mechanisms extend transverse carrier rails 250 to their second position.

Rather than using one drive motor 120 for each carrier propulsion unit, it is possible to have one such motor power more than one such unit. For a pair of longitudinal carrier propulsion units 30 within a given storage cell, one drive motor 120 can be mounted on the carrier propulsion frame 50 of one of the longitudinal carrier propulsion units 30 and a shaft can transfer power to the remaining longitudinal carrier propulsion unit 30. The same can be done for each pair of transverse carrier propulsion units 40 within each cell, with the addition of whatever other devices, such as universal joints, are necessary to compensate for possible differential movement of the units when the jacks 160 are actuated. Mechanically linking pairs of carrier propulsion units in a given storage cell is desirable to insure that the drive wheels 60 of each pair of carrier propulsion units are rotating at approximately the same rate.

Elevator shaft 20 contains a lifting member capable of supporting a cargo carrier, denominated elevator car 25 in the Figures. Elevator car 25 can be moved between levels of a storage facility by means of cables affixed to the top of elevator car 25, which cables are looped around pulleys rotated by a traction motor and then affixed to movable counterweights located in shaft 20. A pair of longitudinal carrier propulsion units 30 and a pair of transverse carrier propulsion units 40 of the same type and in the same configuration as shown for the storage cells are mounted in elevator car 25.

Thus, the item or items to be stored can be brought to the appropriate level on a cargo carrier 140 via the elevator car 25 located in elevator shaft 20. Then by actuating the drive wheel 60 of either the longitudinal carrier propulsion units 30 or the transverse carrier propulsion units 40 contained in the elevator car 25, the cargo carrier 140 can immediately be moved, in the floor plan shown in Figure 1, to any of cells $C_{2,1}$, $C_{2,3}$, $C_{3,2}$ and $C_{1,2}$. Further movement of cargo carrier 140 can then be accomplished simply by actuating the appropriate pairs of propulsion frames in the cell containing the cargo carrier and in the cell to which the cargo carrier is to be moved (the "transferee cell").

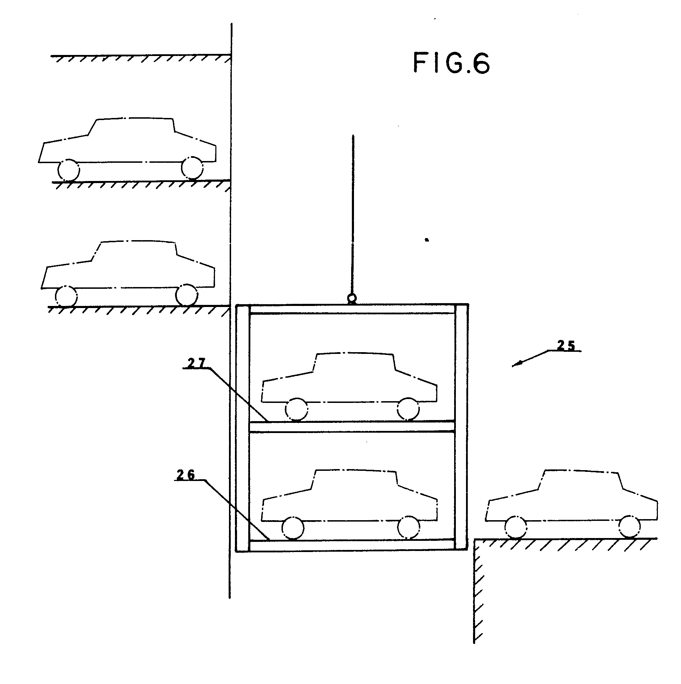

Figure 6 shows an elevator car 25 that can be used with this invention. The elevator car 25 shown in Figure 6 is characterized by a lower level 26 and an upper level 27. A pair of longitudinal carrier propulsion units 30 and a pair of transverse carrier propulsion units 40 of the same type and in the same configuration as shown for the storage cells is contained on both upper level 27 and lower level 26. The distance between upper level 27 and lower level 26 is the same as that between the different levels of the multi-level storage facility in which the elevator is used.

The elevator car 25 shown in Figure 6 speeds storage and retrieval of cargo in a multi-level storage facility. For example, a unit of cargo (an automobile in the case of Figure 6) is first moved into upper level 27. Elevator car 25 is then

-12-

hoisted one level and another automobile is moved onto lower level 26. The elevator is then hoisted to the two desired storage levels, and the automobiles are simultaneously moved on automobile carriers from the elevator car 25 to the desired storage locations.

A similar process holds for retrieval of cargo; elevator car 25 is first hoisted to the two desired levels and two automobiles on automobile carriers are simultaneously moved into upper level 27 and lower level 26. Elevator car 25 is then lowered, with the automobile on lower level 26 first being removed, followed by further lowering of elevator car 25 and removal of the automobile from upper level 27.

Cargo carriers 140 can be left in the storage cells when not in use. Alternatively, in situations where the time between succesive storage or retrieval operations is desireably kept to a minimum, a cargo carrier storage system can be used to extract or insert cargo carriers 140 from or into elevator car 25 proximate the point where cargo is brought to or retrieved from elevator car 25.

Although Figure 1 only shows nine storage cells, it is entirely possible to increase the number of rows and aisles and vastly increase the number of available storage cells. Furthermore, the structure of this invention does not a priori require more than one elevator to serve the different levels of the storage building. For example, a level having 40 rows and 40 aisles has 399 storage locations (400 positions less one to

-13-

accommodate an elevator shaft). For such an embodiment, assuming the elevator shaft is in position 2,2, a cargo carrier can be moved from this position to cell $C_{20,20}$ by successively actuating the transverse carrier propulsion units 40 in aisle $A_2$ until cargo carrier 140 is in cell $C_{20,2}$ and then successively engaging the appropriate longitudinal carrier propulsion units 30 of row 20 until cargo carrier 140 is in cell $C_{20,20}$.

While it is necessary that the transferee cell must be free of any other cargo carrier, whether or not the transferee cell is the final destination of the cargo carrier, it is not necessary to leave any additional cells empty or require additional elevator shafts for storage. Provided that there is at least one empty cell on a level, an additional cargo carrier can be moved into that cell from the elevator car 25 by appropriately shifting cargo carriers from cell to cell. In such shifting, it may be necessary to use the elevator car 25 as an empty cell. The necessary actuation of the drive wheels 60 of the appropriate propulsion units can be performed by an appropriately programmed computer associated with the storage system. This computer can also keep track of whether a storage cell is occupied or unoccupied, and if occupied, the contents of the cell.

If it is desired to have relatively fast storage and retrieval, the cells of one row and one aisle on each level can be kept empty. Thus, in the previous example where a cargo carrier 140 is to be moved from the elevator car 25 in position 2,2 to cell $C_{20,20}$, assume that the cells of row 3 and aisle 20 are purposely left empty. Further assume that all other cells are occupied. Thus, to effectuate the movement, the contents of all cells from $C_{4,2}$ through $C_{20,19}$ are simultaneously longitudinally shifted such that the contents of cell $C_{4,2}$ are shifted to cell $C_{4,3}$, the contents of cell $C_{5,3}$ are shifted cells $C_{5,4}$, and so on to clear all cells of aisle $A_2$. Cargo carrier 140 can then be moved from position 2,2 to cell $C_{20,2}$. Next, the contents of all cells from $C_{4,3}$ to $C_{20,20}$ can be simultaneously transversely shifted such that the contents of $C_{4,3}$ are shifted to $C_{3,3}$, the contents of $C_{5,5}$ are shifted to $C_{4,5}$, and so on to clear a path in row $R_{20}$ from cell $C_{2,20}$ to cell $C_{20,20}$. Cargo carrier 140 can then be moved in one operation to cell $C_{20,20}$ from cell $C_{20,2}$.

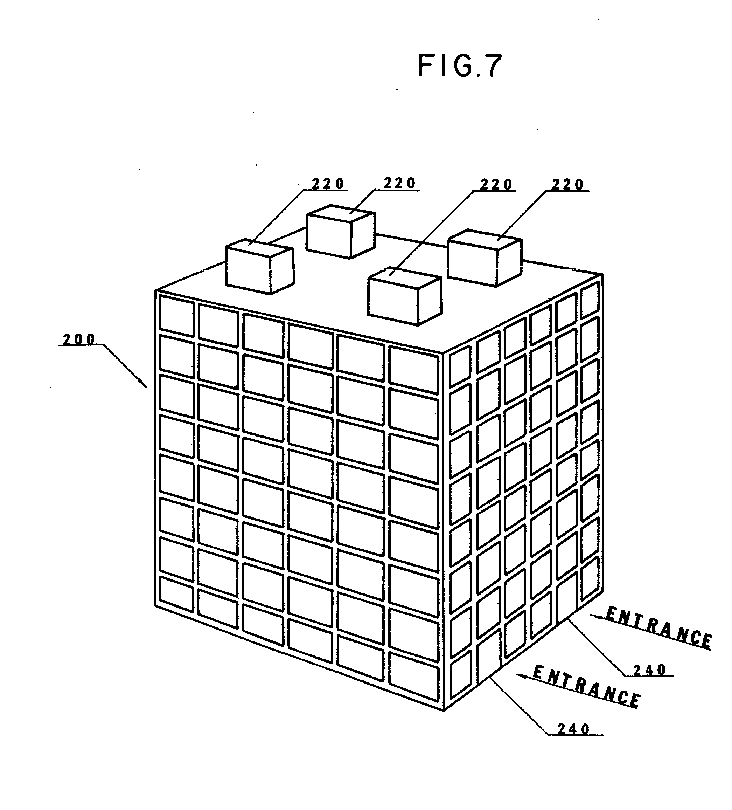

Figure 7 illustrates a parking building 200 which can store up to 250 cars in an area of just over six car widths by six car lengths. The first level parks twenty six cars, while levels two through eight each park 32 cars. Four elevators (not shown) in respective elevator shafts (not shown) extending downward from elevator rooms 220 move the cars between levels. Two entrances 240 are provided at locations adjacent elevator shafts. Two exits (not shown) may be similarly located. The functions of entrances and exits may be interchanged so that more entrances than exits are provided for parking during the morning rush hours and more exits are provided for releasing cars during the evening rush hours. Multilevel elevators (Figure 6) may be used. It will be understood that interlocks sensitive to the position of the elevators are necessary so that carrier propulsion systems in storage cells adjacent the elevator shafts can not be activated to move carriers into the shafts when an elevator is not present.

The storage system described above requires a minimum amount of space. The only space that cannot be devoted to storage is that required for the carrier propulsion units and, if used, the cargo carrier storage wells. But as can be seen from the drawings, the size of the carrier propulsion units is sufficiently small such that they will only minimally extend, if at all, above and below the structural beams needed to safely support the items being stored. Further, the storage wells are of such a modest size as to fit within the spaces normally reserved for housing the ventilation, heating and electrical equipment typically required by any mult-leveled facility. Additionally, since each storage cell can be equipped with drive motors, a breakdown in one cell does not neccessarily affect other cells.

The storage system described above has a wide variety of uses. One use is in a parking garage, where each cargo carrier 140 is adapted to carry an automobile. Such a parking garage would be of the type located adjacent to a shopping center, office building, apartment complex, or similar facility.

Another use is in ships adapted to carry automobiles, also called "Ro-Ro's". This invention can be employed within the hold of the ship to store cars within the hold and move them between their storage cells and a point within the hold where they can be driven onto and off of the ship.

This invention is also ideally suited for the storage of cargo containers in a ship's hold. In such an instance, cargo carriers 140 can be dispensed with; instead, the bottoms of the containers can be provided with rails or other appropriate guides to allow their movement on the drive wheels 60 of the carrier propulsion units. The ship's cargo hoist system, or alternatively, a dockside hoist system, can be used to move containers between the elevator car 25 and the dock. This invention is also useful for storage of the containers at the dockside pending loading onto a truck trailer chassis or into a ship.

Yet another use of this invention is in a warehouse or factory, or at a selling point, such as an auto supply or hardware store, for storage and retrieval of inventory items.

-1-

## C L A I M S

1.       A storage system, comprising:

(a)   an array of storage cells, each storage cell comprising a first carrier propulsion system and a second carrier propulsion system for moving cargo or cargo carrier;

(b)   the first carrier propulsion system for moving the cargo or carrier in a first direction, operable when in contact with the cargo or carrier, and actuated by a selectively actuated motive force;

(c)   the second carrier propulsion system for moving the cargo or carrier in a second direction, operable when in contact with the cargo or carrier, and actuated by a selectively actuated motive force;

(d)   lifting means for moving at least one of said first carrier propulsion system or said second carrier propulsion system in only a vertical direction so as to selectively cause or prevent contact between the cargo or carrier and the first carrier propulsion system or the second carrier propulsion system.

2.       The storage system as in claim 1, wherein the lifting means are disposed proximate each end of at least one of said first carrier propulsion system and said second carrier propulsion system.

3.       The storage system as in claim 1, wherein said first carrier propulsion system and said second carrier propulsion system each include carrier propulsion means for engaging the carrier at the periphery thereof.

4.       The storage system as in claim 3, wherein the carrier propulsion means each engages a guide means affixed to said carrier, said guide means being disposed proximate the periphery of the carrier.

5.       The storage system as in claim 3, wherein the guide means are sections of rails, and the carrier propulsion means are wheels for contacting said rails.

6.       The storage system of claim 1, wherein said storage

CASE:  818,253

cells are arranged in a plurality of storage levels, further comprising means for moving a cargo carrier between the storage levels.

7.        The storage system of claim 1, configured as a multi-level parking garage, wherein said storage cells are arranged in a plurality of storage levels, and said carrier is capable of carrying an automobile, further comprising means for moving the carrier between the storage levels.

8.        The storage system of claim 1, wherein said array of storage cells includes rows and columns and wherein at least a portion of one row and a portion of one column are empty of cargo or carriers, thus permitting rapid retreival of cargo or carriers.

FIG.I

FIG.2

FIG.3

A — A'

0 232 725

# FIG.4

## FIG.5A

## FIG.5B

## FIG.5C

0 232 725

FIG.6

27

26

25

# FIG.7

## EUROPEAN SEARCH REPORT

## DOCUMENTS CONSIDERED TO BE RELEVANT

EP 87100318.2

| Category | Citation of document with indication. where appropriate, of relevant passages | Relevant to claim | CLASSIFICATION OF THE APPLICATION (Int. Cl.4) |
|---|---|---|---|
| X | DE - B - 1 559 159 (FRANGOS) <br> * Totality * <br> -- | 1,5,7 | E 04 H 6/18 <br> B 65 G 1/10 |
| A | US - A - 4 470 742 (SCHINDLER) <br> * Totality * <br> ---- | 1 | |

TECHNICAL FIELDS SEARCHED (Int. Cl.4)

E 04 H
B 65 G

The present search report has been drawn up for all claims

| Place of search | Date of completion of the search | Examiner |
|---|---|---|
| VIENNA | 08-04-1987 | HANSI |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82